Europäisches Patentamt

European Patent Office

Office européen des brevets

(11) Veröffentlichungsnummer: **0 257 384 B1**

# EUROPÄISCHE PATENTSCHRIFT

(45) Veröffentlichungstag der Patentschrift: **22.05.91**

(21) Anmeldenummer: **87111303.1**

(22) Anmeldetag: **05.08.87**

(51) Int. Cl.⁵: **F02D 33/02**, F02D 41/12, F02D 41/14

(54) **Brenngemischbildungseinrichtung.**

(30) Priorität: **13.08.86 DE 3627471**

(43) Veröffentlichungstag der Anmeldung:
**02.03.88 Patentblatt 88/09**

(45) Bekanntmachung des Hinweises auf die
Patenterteilung:
**22.05.91 Patentblatt 91/21**

(84) Benannte Vertragsstaaten:
**DE FR GB IT**

(56) Entgegenhaltungen:
EP-A- 0 140 152
EP-A- 0 176 967
GB-A- 2 141 842
US-A- 4 192 140
US-E- 32 030

PATENT ABSTRACTS OF JAPAN, Band 9, Nr.
67 (M-366)[1790], 27. März 1985; & JP-A-59
200 035 (MITSUBISHI JIDOSHA KOGYO K.K.)
13-11-1984

(73) Patentinhaber: **PIERBURG GMBH**
**Alfred-Pierburg-Strasse 1**
**W-4040 Neuss 1(DE)**

(72) Erfinder: **Härtel, Günter**
**Am Vogelbusch 16**
**W-4040 Neuss 21(DE)**
Erfinder: **Thiel, Christof**
**Burgstrasse 31**
**W-4040 Neuss 21(DE)**
Erfinder: **Schürfeld, Armin**
**Wagnerplatz 13**
**W-4005 Meerbusch 2(DE)**

(74) Vertreter: **Schumacher, Bernd, Dipl.-Ing.**
**Am Schwaberg 13**
**W-6450 Hanau 6(DE)**

## Beschreibung

Die Erfindung betrifft eine Einrichtung gemäß dem Oberbegriff von Anspruch 1.

Bei einer derartigen Einrichtung, die auch als das elektronische Gemischbildungssystem "ECOTRONIC" der Firma Pierburg GmbH & Co. KG, Neuss, bekannt geworden ist, erfolgt die Füllungssteuerung im Leerlauf, beim Warmlauf und beim Schub in Abhängigkeit von gemessenen Betriebsparametern, wobei im Schub eine Schubabschaltung erfolgt. Zum Verbessern des Fahrbetriebes kann dabei in bestimmten Betriebsphasen eine Dämpfung der Drosselklappen-Schließbewegung erfolgen, ohne daß dabei eine unzulässige Beeinflussung der Motorbremswirkung auftritt.

Bei mit Katalysatoren ausgerüsteten Kraftfahrzeugen treten in bestimmten Betriebsphasen ungünstige Betriebsverhältnisse auf, bei denen keine ausreichend zündfähige Zylinderfüllung erzielbar ist. Dieses führt zu Zündaussetzern und einem großen Ausstoß an noch brennfähigen Schadstoffen, die entweder in die Atmosphäre gelangen oder einen Katalysator so hoch erhitzen können, daß er zerstört wird. Zum Schutz des Katalysators ist es bekannt, in bestimmten Betriebsphasen eine Schubabschaltung oder Schubanhebung vorzusehen. Aus der EP-A-176967 ist es bekannt eine Mindestluftmenge in Abhängigkeit von der Temperatur vorzugeben. Bei Unterschreitung dieser Menge, wird die Drosselklappe geöffnet.

Der vorliegenden Erfindung liegt die Aufgabe zugrunde, eine Brenngemischbildungseinrichtung der im Oberbegriff genannten Art, also eine solche mit einer Schubabschaltung im Schubbetriebsfall, so auszubilden, daß mit vergleichsweise einfachen Mitteln stets und ohne Beeinträchtigung der Schubabschaltung im Schubbetriebsfall ein wirksamer, betriebsgerechter Katalysatorschutz gewährleistet ist.

Zur Lösung der gestellten Aufgabe zeichnet sich eine Brenngemischbildungseinrichtung der im Oberbegriff genannten Art erfindungsgemäß durch die im Kennzeichen von Anspruch 1 aufgeführten Merkmale aus. Demnach ist dem Steuergerät ein Kennfeldspeicher zugeordnet, in dem eine geeignete Katalysatorschutzkennlinie bzw. ein entsprechender Kennlinienbereich abgelegt ist. Ein Vergleichsmittel sorgt für ein wiederholtes Vergleichen der aktuellen Werte der gemessenen Betriebsparameter mit der Katalysatorschutzkennlinie. Beim Unterschreiten derselben erfolgt unabhängig von der jeweiligen Fahrpedal-Stellung ein Zwangsöffnen des Gliedes zur Füllungssteuerung bis zu dessen in der Schutzkennlinie festgelegten Mindest-Öffnungsgrad erfolgen. Im Schubbetriebsfall ist jedoch die Schubabschaltung, also das Schließen des Gliedes zur Füllungssteuerung, dem Zwangsöffnungsvorgang übergeordnet. Eine derartige Einrichtung ist relativ einfach, da das Ablegen der erforderlichen Daten in dem Kennfeldspeicher heute keine Problematik mehr aufwirft. Deshalb ist ein ständiger Vergleich mit den Kennfeldspeicher-Daten möglich, was zu einem stets reproduzierbaren Betriebsergebnis führt. Durch den bei bestimmten Betriebsphasen erfolgenden Zwangsöffnungsvorgang wird sicher vermieden, daß eine Katalysatorschädigung eintritt. Gleichzeitig wird im Schubbetrieb die Schubabschaltung durch Überordnung sichergestellt.

Die erfindungsgemäße Einrichtung ermöglicht ein relativ einfaches Umrüsten der bekannten Brenngemischbildungseinrichtung, indem im wesentlichen der Kennfeldspeicher an das Steuergerät angeschlossen wird und ein ohnehin vorhandenes Steuerungsmittel für das Glied zur Füllungssteuerung gegebenenfalls gleichzeitig auch als Übersteuerungsmittel zum Zwangsöffnen eingesetzt wird.

Durch die Weiterbildung gemäß Anspruch 2 wird vermieden, daß bereits ein kurzzeitiges Unterschreiten des Mindest-Öffnungsgrades zu einem sofortigen Zwangsöffnungsvorgang führt, was nicht erforderlich und auch nicht sinnvoll ist.

Durch die Weiterbildung gemäß Anspruch 3 wird sichergestellt, daß die übergeordnete Schubabschaltung zeitverzögert einsetzt und somit ein nur sehr kurzzeitiges Freigeben des Fahrpedals noch nicht zur Schubabschaltung führt.

Gemäß der Weiterbildung nach Anspruch 4 kann die Betriebseinsatzdauer des Übersteuerungsmittels zeitkonstant oder betriebsparameterabhängig sein. Damit kann die Funktion des Übersteuerungsmittels an die jeweiligen Betriebsverhältnisse angepaßt werden. Beispielsweise ist es möglich, die Betriebseinsatzdauer umso größer zu wählen, je stärker die Unterschreitung der Schutzkennlinie war.

Gemäß einer weiteren Ausgestaltung nach Anspruch 5 kann jeweils nach bestimmten Zeitintervallen eine neue Erfassung der Betriebsparameter durchgeführt werden, um so nach bestimmten Zeiten eine Neuanpassung an die jeweiligen Betriebsverhältnisse zu gewährleisten.

Alternativ können gemäß einer weiteren Ausgestaltung nach Anspruch 6 nach erfolgtem Zwangsöffnen die Fahrpedal-Stellung abgetastet und dieser ein fiktiver Öffnungsgrad des Gliedes zur Füllungsteuerung zugeordnet werden, wobei dann eine Betriebsunterbrechung des Übersteuerungsmittels erfolgt, wenn der fiktive Öffnungsgrad wenigstens dem Mindestöffnungsgrad entspricht. Hierdurch ist es möglich, den Zwangsöffnungsvorgang erst dann zu unterbrechen, wenn das Fahrpedal ein den Mindestöffnungsgrad übersteigendes Maß vorgibt. Über die Fahrpedalstellung kann auch in Verbindung mit der Drehzahl ein Schubbetriebsfall festgestellt werden, der ebenfalls zur Betriebsunterbrechung des Übersteuerungsmittels führt.

Die Weiterbildung gemäß Anspruch 7 ergibt einen Kennfeldspeicher mit einer relativ einfachen, bedarfsgerechten Katalysatorschutzkennlinie, bei der Mindest-Öffnungsgrad drehzahl- und temperaturabhängig, insbesondere in Abhängigkeit von der Katalysatortemperatur, abgelegt ist.

Abgesehen davon, daß ein Mittel zur Schubabschaltung und das Übersteuerungsmittel als separate Glieder ausgebildet sein können, ist es gemäß Anspruch 8 bevorzugt, hierfür ein einziges Glied vorzusehen, wie beispielsweise einen pneumatischen Drosselklappenansteller. Dieser kann von dem Steuergerät so beaufschlagt werden, daß er für die Leerlaufregelung, die Schubabschaltung, die Warmlaufsteuerung und den Übersteuerungsvorgang zum Zwecke des Katalysatorschutzes sorgt. Eine derartige Mehrfachausnutzung vereinfacht den Gesamtaufbau, reduziert die Kosten und führt zu einem einfachen, betriebssicheren System.

In weiterer Ausgestaltung gemäß Anspruch 9 kann die Zeitverzögerung für das Zwangsöffnen und/oder die Schubabschaltung etwa 1 Sekunde betragen. Dieser Wert hat sich im Betrieb als zweckmäßig herausgestellt. In diesem Zusammenhang ist es zweckmäßig beim Unterschreiten des Mindestöffnungsgrades, also bei einem zumindest teilweise erfolgenden Freigeben des Fahrpedals, nach ca. 1 Sekunde Wartezeit eine Zwangsöffnung auf den Mindestöffnungsgrad durchzuführen, um nach einer weiteren Sekunde Wartezeit eine Abfrage durchzuführen, ob Schub vorliegt und somit eine übergeordnete Schubabschaltung vorzunehmen ist. Wenn dieses nicht zutrifft, wird wieder aufden Mindestöffnungsgrad vorgefahren, bis entweder dieser entsprechend der Vorgabe durch die Fahrpedalstellung überschritten wird oder eine Schubdrehzahlschwelle unterschritten wird.

In weiterer Ausgestaltung ist es gemäß Anspruch 10 bevorzugt, als zusätzlichen Betriebsparameter auch die Katalysator-Temperatur zu erfassen und davon abhängig eine Katalysatorschutzkennlinie auszuwählen, durch die der Mindestöffnungsgrad der Hauptdrossel so niedrig festgelegt ist, daß der Katalysator mit höchst zulässiger Temperatur arbeitet,wodurch ein Katalysatorschutz bei niedrigstem Kraftstoffmehrverbrauch erzielbar ist.

Die Erfindung wird nachfolgend an einem zeichnerisch dargestellten Ausführungsbeispiel näher erläutert. Es zeigen:

Figur 1  - in einer schematischen Gesamtansicht eine Brenngemischbildungseinrichtung nach der vorliegenden Erfindung mit einem pneumatischen Drosselklappenansteller, der zusätzlich zu weiteren Aufgaben auch für die Zwangsöffnung der Drosselklappe zum Zwecke des Katalysatorschutzes und für die Schubabschaltung sorgt, und

Figur 2  - ein Beispiel für eine temperaturabhängige Katalysatorschutzkennlinie, die in einem Kennfeldspeicher der Einrichtung festgelegt ist.

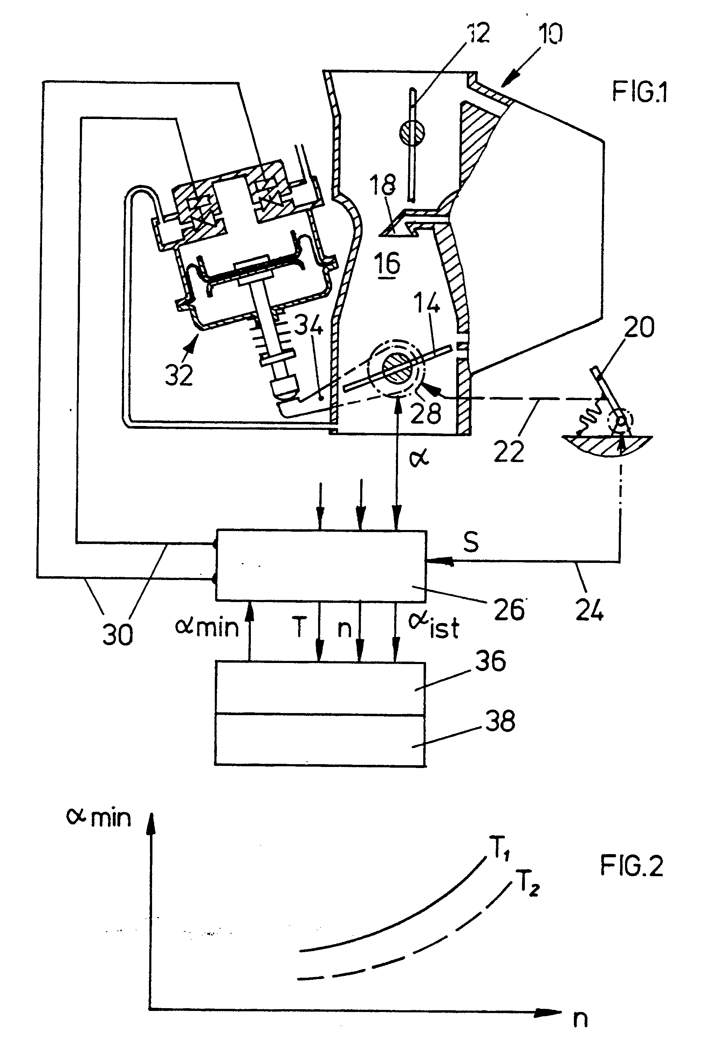

Gemäß Figur 1 weist ein Vergaser 10 einer Brenngemischbildungseinrichtung eine schwenkbare Vordrossel 12 und eine schwenkbare Hauptdrossel 14 auf, zwischen denen sich eine Mischkammer 16 befindet. In den engsten Venturi-Bereich derselben mündet eine Kraftstoffzuteilungseinrichtung 18, aus der der Kraftstoff entsprechend dem Unterdruck im Venturi-Bereich bedarfsgerecht angesaugt wird.

Die Hauptdrossel 14 ist über eine Wirkverbindung 22 mit einem willkürlich betätigbaren Fahrpedal 20 gekoppelt. Die Wirkverbindung 22 kann dergestalt sein, daß es sich hierbei um eine mechanische Zwangsverbindung oder um eine indirekte Steuerverbindung handelt, bei der die Hauptdrossel 14 entsprechend der Vorgabe des Fahrpedals 20 gesteuert wird.

Die jeweilige Fahrpedal-Stellung wird als Sollsignal S bzw. als fiktiver Öffnungsgrad für die Hauptdrossel 14 einem elektronischen Steuergerät 26 zugeführt, dem auch weitere Betriebsparameter zugeleitet werden. Hierzu gehören die Motordrehzahl n, der beispielsweise mit einem Drehpotentiometer 28 gemessene tatsächliche Öffnungsgrad $\alpha_{ist}$ der Hauptdrossel 14 und die Temperatur T, insbesondere die Katalysatortemperatur. Mit Hilfe dieser Betriebsparameter sorgt das elektronische Steuergerät 26 über Steuerleitungen 30 für ein Ansteuern eines pneumatischen Drosselklappenanstellers 32, dem über entsprechende Anschlußleitungen der Atmosphärendruck oder der Unterdruck aus dem Bereich stromab der Hauptdrossel 14 ansteuerungsgemäß zugeführt werden kann. Entsprechend den tatsächlichen Druckverhältnissen in dem Drosselklappenansteller kann dessen nicht näher bezeichneter Stößel einen mit der Hauptdrossel 14 gekoppelten Hebel 34 verstellen und somit den minimalen Öffnungsgrad der Hauptdrossel 14 begrenzen. Bei Freigabe des Fahrpedals 20 gelangt die Hauptdrossel 14 normalerweise in ihre Schließposition, bei der der Hebel 34 am Stößel des Drosselklappenstellers 32 anliegt. Dieser kann somit für die Warmlaufsteuerung für ein weiteres Öffnen, für die Leerlaufregelung für ein variables Verstellen und für die Schubabschaltung für ein völliges Schließen der Hauptdrossel 14 sorgen.

Gemäß Figur 1 ist an das Steuergerät 26 ein vorzugsweise elektronisches Vergleichsmittel 36 mit einem nachgeschalteten Kennfeldspeicher 38 angeschlossen. Im letzteren ist eine Katalysatorschutzkennlinie bzw. ein entsprechender Kennlinienbereich gemäß der Darstellung aus Figur 2 abgelegt. Dieser beinhaltet die Abhängigkeit des Mindestöffnungsgrades $\alpha_{min}$ der Hauptdrossel 14 von der Motordrehzahl n und gegebenenfalls der Temperatur T, wie der Katalysatortemperatur. In Figur 2 sind zwei Kurven für zwei Temperaturen $T_1$ und $T_2$ dargestellt. Es ist erkennbar, daß der Mindestöffnungsgrad mit der Motordrehzahl ansteigt.

Das Vergleichsmittel 36 sorgt nun dafür, daß der Kennfeldspeicher 38 in Abhängigkeit von der jeweiligen Motordrehzahl und ggfs. der Temperatur abgefragt wird, welcher Mindestöffnungsgrad $\alpha_{min}$ der Hauptdrossel 14 erforderlich ist, damit keine Katalysatorbeschädigung auftritt. Solange der tatsächliche Öffnungsgrad $\alpha_{ist}$ größer als $\alpha_{min}$ ist, erfolgt keine zusätzliche Beeinflussung des Drosselklappenanstellers 32. Wenn jedoch die Katalysatorschutzkennlinie unterschritten wird, das heißt wenn $\alpha_{ist}$ kleiner als $\alpha_{min}$ ist, gibt das Vergleichsmittel 36 dem Steuergerät 26 ein Signal dahingehend, daß der Drosselklappenansteller 32 die Hauptdrossel 14 auf den Mindestöffnungsgrad $\alpha_{min}$ vorstellen muß, und zwar unabhängig von der jeweiligen Stellung des Fahrpedals 20. In diesem Fall wirkt der Drosselklappenansteller 32 als Übersteuerungsmittel, da die Wirkverbindung 22 für den kritischen Fall einer Beschädigungsgefahr für den Katalysator vorübergehend aufgehoben wird. Auch bei kleinen Verstellungsgraden des Fahrpedals 20 liegt somit ein größerer Öffnungsgrad, nämlich der Mindestöffnungsgrad $\alpha_{min}$, der Hauptdrossel 14 vor.

Dieser als Katalysatorschutz dienende Zwangsöffnungsvorgang der Hauptdrossel 14 wird dann aufgehoben, wenn ein Schubbetriebsfall vorliegt. Dieser kann im allgemeinen dadurch erkannt werden, daß die Fahrpedal-Stellung über die Leitung 24 bzw. das Signal S abgetastet wird und bei so erkannter Freigabe des Fahrpedals 20 die Motordrehzahl n über einer bestimmten Schubdrehzahlschwelle liegt. In diesem Fall fährt der Stößel des Drosselklappenanstellers 32 ganz zurück, so daß sich die Hauptdrossel 14 bis zu einer Schubabschaltung schließen kann.

Figur 1 stellt lediglich ein Ausführungsbeispiel dar, bei dem der zunächst für andere Zwecke vorhanden gewesene Drosselklappenansteller 32 gleichzeitig auch als Übersteuerungsmittel zum Zwangsöffnen der Hauptdrossel 14 eingesetzt wird. Alternativ können hierfür auch separate Glieder vorgesehen sein.

Grundsätzlich ist es auch möglich, daß das Vergleichsmittel 36 und/oder der Kennfeldspeicher 38 in das elektronische Steuergerät 26 integriert sind oder daß eine andere Verknüpfung dieser Mittel vorliegt. Wichtig ist dabei, daß in einem Kennfeldspeicher die Katalysatorschutzbedingungen betriebsparameterabhängig abgelegt sind und ein wiederholtes Vergleichen der tatsächlichen Betriebsparameter mit den Schutzbedingungen vorgenommen wird, um dann in den Betriebsablauf zwangssteuernd einzugreifen, wenn die Schutzbedingungen nicht erfüllt sind.

## Ansprüche

1. Brenngemischbildungseinrichtung für mit Katalysatoren ausgerüstete Kraftfahrzeuge mit einem willkürlich betätigbaren Fahrpedal, das mit einem Glied zur Füllungssteuerung, wie einer Hauptdrosselklappe, dieses beeinflussend gekoppelt ist, ferner mit einem elektronischen Steuergerät zum Beeinflussen der Füllungssteuerung in Abhängigkeit von gemessenen Betriebsparametern, nämlich des jeweiligen Öffnungsgrades des Gliedes zur Füllungssteuerung und der Motordrehzahl, und mit einem Mittel zum Erkennen von einen Schubbetrieb repräsentierenden Betriebsparametern sowie einer im Schubbetriebsfall erfolgenden Schubabschaltung durch Schließen des Gliedes zur Füllungssteuerung, **gekennzeichnet durch** einen dem Steuergerät (26) zugeordneten, an sich bekannten Kennfeldspeicher (38), in dem eine Katalysatorschutzkennlinie oder ein entsprechender Kennlinienbereich in Form eines Zusammenhangs zwischen dem eine unvollständige Verbrennung vermeidenden Mindest-Öffnungsgrad ($\alpha_{min}$) des Gliedes zur Füllungssteuerung (14) und der Motordrehzahl (n) abgelegt ist, durch ein an sich bekanntes Vergleichsmittel (36) zum wiederholten Vergleichen der aktuellen Werte der gemessenen Betriebsparameter ($\alpha_{ist}$,n) mit der Katalysatorschutzkennlinie des Kennfeldspeichers (38) und durch ein Übersteuerungsmittel (32), das bei einem einen Betrieb unterhalb des Mindest-Öffnungsgrades anzeigenden Vergleichsergebnis anspricht und das Glied zur Füllungssteuerung (14) vorübergehend zwangsweise auf den Mindest-Öffnungsgrad öffnet, wobei im aus den erkannten Betriebsparametern ($\alpha_{ist}$,n) festgelegten Schubbetriebsfall die Schubabschaltung durch Schließen des Gliedes zur Füllungssteuerung übergeordnet ist.

2. Einrichtung nach Anspruch 1, dadurch gekennzeichnet, daß das Übersteuerungsmittel eine Zeitverzögerung für seinen bei fortgesetzter Unterschreitung des Mindest-Öffnungsgrades ($\alpha_{min}$) erfolgenden Betriebseinsatz aufweist.

3. Einrichtung nach Anspruch 1 oder 2, gekennzeichnet durch einen gegenüber einer Schuberkennung zeitverzögerten Betriebseinsatz der übergeordneten Schubabschaltung.

4. Einrichtung nach einem der Ansprüche 1 bis 3, dadurch gekennzeichnet, daß die Betriebseinsatzdauer des Übersteuerungsmittels zeitkonstant oder betriebsparameterabhängig ist.

5. Einrichtung nach Anspruch 4, gekennzeichnet durch eine nach erfolgtem Zwangsöffnen des Gliedes zur Füllungssteuerung (14) nach Ablauf eines bestimmten Zeitintervalls erfolgende Betriebsunterbrechung des Übersteuerungsmittels (32) zum erneuten Erfassen der Betriebsparameter ($\alpha_{ist}$, n) für ein Vergleichen mit der Katalysatorschutzkennlinie und/oder für ein Durchführen der Schubabschaltung.

6. Einrichtung nach Anspruch 4, gekennzeichnet durch eine nach erfolgtem Zwangsöffnen des Gliedes zur Füllungssteuerung (14) wiederholt erfolgende Abtastung des Istwertes (S) der Stellung des Fahrpedals (20), durch eine Zuordnung derselben zu einem dieser normalerweise entsprechenden fiktiven Öffnungsgrad des Gliedes zur Füllungssteuerung (14) und durch eine Betriebsunterbrechung des Übersteuerungsmittels (32) dann, wenn dieser fiktive Öffnungsgrad wenigstens dem Mindest-Öffnungsgrad ($\alpha_{min}$) entspricht.

7. Einrichtung nach einem der Ansprüche 1 bis 6, gekennzeichnet durch einen Kennfeldspeicher (38) mit einer Katalysatorschutzkennlinie in Form eines mit der Motordrehzahl (n) ansteigenden Mindest-Öffnungsgrades ($\alpha_{min}$) und mit der Temperatur, wie der Katalysatortemperatur, als Parameter.

8. Einrichtung nach einem der Ansprüche 1 bis 7, dadurch gekennzeichnet, daß das Übersteuerungsmittel (32) und ein Mittel zur Schubabschaltung in Form eines einzigen Gliedes, wie eines pneumatischen Drosselklappenanstellers, ausgebildet sind.

9. Einrichtung nach Anspruch 2 oder 3, dadurch gekennzeichnet, daß die Zeitverzögerung für das Zwangsöffnen und/oder die Schubabschaltung etwa 1 Sekunde beträgt.

10. Einrichtung nach einem der Ansprüche 1 bis 9, dadurch gekennzeichnet, daß das Steuergerät (26) mit einem Fühler zum Erfassen der Katalysatortemperatur als zusätzlichem Betriebsparameter verbunden ist.

**Claims**

1. A fuel injection device for motor vehicles fitted with catalyzers and having an accelerator pedal which can be operated arbitrarily, said pedal being coupled with an element for fuel injection control, such as a main throttle valve, so as to influence said element, and further comprising an electronic control device for influencing the fuel injection control as a function of measured operating parameters, namely the respective degree of opening of the element for filling control and the engine speed, and comprising means for detecting operating parameters representing thrust operation as well as a thrust cutoff effected in the event of thrust operation by closing the element for fuel injection control, characterised by a performance graph store (38) known per se, which is associated with the control device (26) and in which a catalyzer protection characteristic or a corresponding characteristic line section is stored in the form of an association between the minimum degree of opening ($\alpha_{min}$) of the element for fuel injection control (14) preventing incomplete combustion and the engine speed (n), a comparing means (36) known per se for the repeated comparison of the actual values of the measured operating parameters ($\alpha_{ist}$, n) with the catalyzer protection characteristic of the performance graph store (38) and an overriding means (32), which is actuated in the event of a comparison result indicating operation below the minimum degree of opening and temporarily and forcibly opens the element for fuel injection control (14) to the minimum degree of opening ($\alpha_{min}$), the thrust cutoff taking precedence by closing the element for fuel injection control in the event of thrust operation determined by the detected operating parameters ($\alpha_{ist}$, n).

2. A device according to claim 1, characterised in that the overriding means has a time delay for its application which is effected in the event of a continuing falling-short of the minimum degree of opening ($\alpha_{min}$).

3. A device according to claim 1 or 2, characterised by an application of the overriding cutoff which is time-delayed relative to a thrust detection.

4. A device according to one of claims 1 to 3, characterised in that the duration of operation of the overriding means is time-constant or is dependent upon operating parameters.

5. A device according to claim 4, characterised by an interruption in the operation of the overriding means (32) effected after the forced opening of the element for fuel injection control (14) and after expiry of a particular time interval for a new detection of the operating parameters ($\alpha_{ist}$, n) for comparison with the catalyzer protection characteristic and/or for carrying out the thrust cutoff.

6. A device according to claim 4, characterised by a repeated scanning of the actual value (S) of the position of the accelerator pedal (20) effected after the forced opening of the element for fuel injection control (14), an association of said position with a fictitious degree of opening of the element for fuel injection control (14) normally corresponding to said position, and an interruption in the operation of the overriding means (32) when the fictitious degree of opening corresponds to at least the minimum degree of opening ($\alpha_{min}$).

7. A device according to one of claims 1 to 6, characterised by a performance graph store (38) comprising a catalyzer protection characteristic in the form of a minimum degree of opening ($\alpha_{min}$), which increases with the engine speed (n), and the temperature, such as the catalyzer temperature, as parameter.

8. A device according to one of claims 1 to 7, characterised in that the overriding means (32) and a means for thrust cutoff are designed in the form of a single element, such as a pneumatic throttle valve adjuster.

9. A device according to claim 2 or 3, characterised in that the time delay for the forced opening and/or the thrust cutoff is approximately 1 second.

10. A device according to one of claims 1 to 9, characterised in that the control device (26) is connected with a sensor for detecting the catalyzer temperature as an additional operating parameter.

**Revendications**

1. Dispositif pour la formation d'un mélange combustible pour des véhicules automobiles équipés de catalyseurs, comprenant une pédale d'accélération pouvant être actionnée à volonté et couplée avec un organe pour la commande du remplissage, tel qu'un papillon d'étranglement principal, de manière à agir sur celui-ci, un appareil de commande électronique pour agir sur la commande de remplissage en fonction de paramètres de fonctionnement mesurés, à savoir le taux d'ouverture respectif de l'organe pour la commande de remplissage et la vitesse de rotation du moteur, et un moyen pour la détection de paramètres de fonctionnement représentant un régime de poussée, ainsi qu'une coupure d'alimentation en poussée par la fermeture de l'organe pour la commande de remplissage qui intervient en cas de régime de poussée, **caractérisé en ce** qu'à l'appareil de commande (26) est associée une mémoire de réseaux de caractéristiques (38) bien connue en soi dans laquelle est stockée une caractéristique de protection de catalyseur ou une plage de caractéristiques correspondante sous la forme d'une relation entre le taux d'ouverture minimum ($\alpha_{min}$) de l'organe pour la commande de remplissage (14) qui évite une combustion complète et la vitesse de rotation (n) du moteur; qu'il comprend un moyen de comparaison (36) bien connu en soi et servant à comparer maintes fois les valeurs momentanées des paramètres de fonctionnement mesurés ($\alpha_{ist}$, n) avec la caractéristique de protection de catalyseur de la mémoire de réseaux de caractéristiques (38), ainsi qu'un moyen de surmodulation (32) qui répond dans le cas d'un résultat de comparaison indiquant un fonctionnement en dessous du taux d'ouverture minimum et provoquant l'ouverture forcée temporaire de l'organe pour la commande de remplissage (14) jusqu'au taux d'ouverture minimum, la coupure d'alimentation en poussée par fermeture de l'organe pour la commande de remplissage étant prioritaire en cas de régime de poussée déterminé à partir des paramètres de fonctionnement détectés ($\alpha_{ist}$, n).

2. Dispositif selon la revendication 1, caractérisé en ce que le moyen de surmodulation présente un retard de temps pour sa mise en service qui intervient lors d'un dépassement vers le bas prolongé du taux d'ouverture minimum ($\alpha_{min}$).

3. Dispositif selon l'une des revendication 1 ou 2, caractérisé par une mise en service de la coupure d'alimentation en poussée prioritaire qui est retardée par rapport à une détection de poussée.

4. Dispositif selon l'une des revendications 1 à 3, caractérisé en ce que la durée de fonctionnement du moyen de surmodulation est constante dans le temps ou dépend des paramètres de fonctionnement.

5. Dispositif selon la revendication 4, caractérisé par une interruption de service du moyen de surmodulation (32) qui intervient après l'ouverture forcée de l'organe pour la commande de remplissage (14) et après un certain intervalle de temps, pour une nouvelle détection des paramètres de fonctionnement ($\alpha_{ist}$, n) en vue d'une comparaison avec la caractéristique de protection de catalyseur et/ou une exécution de la coupure d'alimentation en poussée.

6. Dispositif selon la revendication 4, caractérisé par une exploration de la valeur effective (S) de la position de la pédale d'accélération (20) qui est effectuée de manière répétée après l'ouverture forcée de l'organe pour la commande de remplissage (14); par une association de cette position de la pédale d'accélération à un taux d'ouverture fictif normalement correspondant de l'organe pour la commande de remplissage (14); et par une interruption de service du moyen de surmodulation (32) lorsque ce taux d'ouverture fictif correspond au moins au taux d'ouverture minimum ($\alpha_{min}$).

7. Dispositif selon l'une des revendications 1 à 6, caractérisé en ce qu'il comprend une mémoire de réseaux de caractéristiques (38) avec une caractéristique de protection de catalyseur sous la forme d'un taux d'ouverture minimum ($\alpha_{min}$) qui augmente avec la vitesse de rotation (n) du moteur, avec la température, par exemple la température du catalyseur, comme paramètre.

8. Dispositif selon l'une des revendications 1 à 7, caractérisé en ce que le moyen de surmodulation (32) et un moyen pour la coupure d'alimentation en poussée sont conformés en un seul organe, par exemple un régulateur de soupape d'étranglement.

9. Dispositif selon l'une des revendications 2 ou 3, caractérisé en ce que le retard de temps pour l'ouverture forcée et/ou la coupure d'alimentation en poussée est d'environ 1 seconde.

10. Dispositif selon l'une des revendications 1 à 9, caractérisé en ce que l'appareil de commande (26) est relié à un capteur pour la détection de la température du catalyseur en tant que paramètre de fonctionnement supplémentaire.

FIG.1

12
10
18
16
14
34
32
20
28
α
22
24
S
26
30
αmin
T
n
α_ist
36
38

α min

T₁
T₂

FIG.2

n